**Europäisches Patentamt**

**European Patent Office**

**Office européen des brevets**

(19)

(11) Veröffentlichungsnummer:

**0 013 704**
**A1**

## (12) EUROPÄISCHE PATENTANMELDUNG

(21) Anmeldenummer: **79104546.1**

(22) Anmeldetag: **16.11.79**

(51) Int. Cl.³: **F 16 H 7/08**, F 16 F 3/10

(30) Priorität: **20.01.79 DE 2902182**

(43) Veröffentlichungstag der Anmeldung: **06.08.80**
**Patentblatt 80/16**

(84) Benannte Vertragsstaaten: **BE FR GB IT NL SE**

(71) Anmelder: **Boge GmbH, Bogestrasse 50,**
**D-5208 Eitorf/Sieg (DE)**

(72) Erfinder: **Brenner, Heinz, Ing.-grad., Am Thurmberg 1,**
**D-5483 Bad Neuenahr-Ahrweiler (DE)**
Erfinder: **Neuburger, Wilhelm, Schlossallee 19,**
**D-5300 Bonn-Bad Godesberg (DE)**

(54) **Mit einem Elastomerkörper ausgerüstetes drehelastisches Lager, insbesondere für Keilriemenspanner von Kraftfahrzeugmotoren.**

(57) Ein mit einem Elastomerkörper ausgerüstetes Lager (6) zur drehelastischen Lagerung von Schwinghebeln, insbesondere von einer Spannrolle (17) tragenden Spannhebeln (15) für Keilriemenspanner von Kraftfahrzeugmotoren, mit einem zylindrischen Innenteil (9, 29), einem das Innenteil (9, 29) umschließenden, mit einem Schwinghebel bzw. Spannhebel (15) verbindbaren oder verbundenen Aussenteil und einem einen Zwischenraum zwischen dem Innenteil (9, 29) und dem Aussenteil ausfüllenden, Umfangskräfte übertragenden Elastomerkörper.

Zur Schaffung eines Lagers der vorerwähnten Art, das eine flache Kennung des Rückstellmoments aufweist und bei dessen Anwendung für einen Keilriemenspanner sich ein Nachstellen des Lagers über die ganze Lebensdauer des Keilriemens erübrigt, bildet das Auslaufende (11, 32) einer mit dem Innenteil (9, 29) verbundenen und Abstand der Windungen aufweisenden Bandspirale (8, 27) das Aussenteil, und der Elastomerkörper füllt den von der Bandspirale (8, 27) umschlossenen Zwischenraum in Form einer mit der Bandspirale (8, 27) haftend verbundenen Elastomerspirale (13, 33) aus.

Fig. 2

- 1 -

**Mit einem Elastomerkörper ausgerüstetes drehelastisches Lager, insbesondere für Keilriemenspanner von Kraftfahrzeugmotoren**

Die Erfindung bezieht sich auf ein mit einem Elastomerkörper ausgerüstetes Lager zur drehelastischen Lagerung von Schwinghebeln, insbesondere von eine Spannrolle tragenden Spannhebeln für Keilriemenspanner von Kraftfahrzeugmotoren, mit einem zylindrischen Innenteil, einem das Innenteil umschließenden, mit einem Schwinghebel bzw. Spannhebel verbindbaren oder verbundenen Außenteil und einem einen Zwischenraum zwischen dem Innenteil und dem Außenteil ausfüllenden, Umfangskräfte übertragenden Elastomerkörper.

Lager dieser Art sind als federnde, mit einem Schwinghebel verbindbare Lagerbuchsen bekannt, wobei das Innenteil aus einer Innenhülse und das Außenteil aus einer Außenhülse bestehen, zwischen denen ein ringförmiger auf Schub beanspruchter, Umfangskräfte übertragender Elastomerkörper als Verdrehfeder wirksam ist. Wenn der Elastomerkörper bei einer Verwendung des bekannten Lagers für einen Spannhebel eines Keilriemenspanners mit Rücksicht auf verlangte stabile Führungseigenschaften entsprechend stark und hart ausgeführt wird, weist das Lager eine verhältnismäßig steile und progessive Kennung des Rückstellmoments auf. Dann besteht der Nachteil, daß die Spannung eines nachgestellten Keilriemens in großen Grenzen schwankt und dadurch die Lebensdauer des Keilriemens herabgesetzt wird. Um eine möglichst gleichmäßige Keilriemenspannung aufrechterhalten zu können, was für eine lange Lebensdauer des Keilriemens Voraussetzung ist, muß das bekannte Lager in nachteiliger Weise nachstellbar ausgeführt werden.

Aufgabe der Erfindung ist, ein Lager der eingangs genannten Art zu schaffen, das eine flache Kennung des Rückstellmoments aufweist und bei dessen Anwendung für einen Keilriemenspanner sich ein Nachstellen des Lagers über die ganze Lebensdauer des Keilriemens erübrigt. Diese Aufgabe wird durch die im Kennzeichenteil des Anspruchs 1 angegebenen Maßnahmen gelöst.

Bei dem so aus einer Bandspirale und einer Elastomerspirale kombinierten Lager lassen sich bei Ausnutzung der maximal zulässigen Beanspruchung des Elastomers große Verdrehwinkel und eine flache Kennung des Rückstellmoments in Abhängigkeit vom Verdrehwinkel verwirklichen. In vorteilhafter Weise kann bei einer Anwendung des Lagers für einen Keilriemenspanner der Abfall der Keilriemenspannung bei einer betriebsbedingten Längung des Keilriemens gering gehalten werden und ist ein Nachstellen des Lagers über die ganze Lebensdauer des Keilriemens nicht erforderlich.

Die Bandspirale dient in erster Linie als Schub- und Druckkräfte auf die Elastomerspirale ausübendes Zugband, wobei sich günstige Beanspruchungen des Elastomers auf Schub und Druck ergeben. Die Bandspirale kann aus einem metallischen oder einem anderen Werkstoff, auch aus einem metallischen oder anderen Gewebe bestehen. Wenn ein Federbandstahl verwendet wird, können durch die Bandspirale zusätzliche Federkräfte erzeugt und besonders stabile Führungseigenschaften des Lagers geschaffen werden.

Für einen Keilriemenspanner wird das Lager vorzugsweise so ausgeführt, daß ein Schenkel eines zweischenkligen, eine Spannrolle tragenden Spannhebels mit einer Verlängerung des Auslaufendes der Bandspirale zugfest verbunden oder verbindbar ist und der andere Schenkel an einem über das Auslaufende der Bandspirale hinausgehenden Auslaufende der Elastomerspirale anliegt. Das erfindungsgemäße Lager kann auch so ausgebildet werden, daß das Auslaufende der Bandspirale in einem begrenzten Umfangbereich mit dem Innenmantel eines zylindrischen Gehäuses haftend verbunden ist und das Auslaufende der Elastomerspirale in einem begrenzten Umfangsbereich an dem Innenmantel des zylindrischen Gehäuses anliegt. Dabei kann das Gehäuse eine Außenhülse sein, die zusammen mit einer Bandspirale, einer Elastomerspirale und einer Innenhülse ein allgemein verwendbares drehelastisches Lagerelement bildet.

Die Bandspirale hat zweckmäßig einen Rechteckquerschnitt und ist in der Abwicklung in ihrer einfachsten Form ein Band gleicher Breite und Dicke. Sie kann auch eine trapezförmige oder andere Form und eine veränderliche Dicke aufweisen. Entsprechend sind die Stirnflächen des fertigen Lagers eben oder kegelstumpfförmig ausgebildet. Beim Einbau und Betrieb des Lagers ist zu berücksichtigen, daß die freiliegenden Flächen der Elastomerspirale bei einer Verdrehung des Lagers sich infolge der von der Bandspirale ausgeübten Druckkräfte seitlich vorwölben und daß die Spiralwindungen enger werden, die radialen Maße des Lagers sich also verringern. Von dem erfindungsgemäßen Lager kann durch Molekularreibung in der Elastomerspirale ausreichende Dämpfungsarbeit zur Dämpfung von Schwingungen geleistet werden, insbesondere, um bei der Anwendung für einen Keilriemenspanner Schwingungen des Keilriemens zu unterdrücken.

Weitere Einzelheiten der Erfindung gehen aus der Beschreibung der Zeichnung hervor, auf der ein bekanntes Lager und Beispiele von Lagern nach der Erfindung dargestellt sind. In der Zeichnung zeigt

Figur 1 ein Lager der bekannten Art,
Figur 2 ein mit einem Spannhebel eines Keilriemenspanners verbundenes Lager nach der Erfindung,
Figur 3 ein mit einem Spannhebel verbindbares Lager nach der Erfindung,
Figur 4 ein mit einer Außenhülse kombiniertes Lager nach der Erfindung.

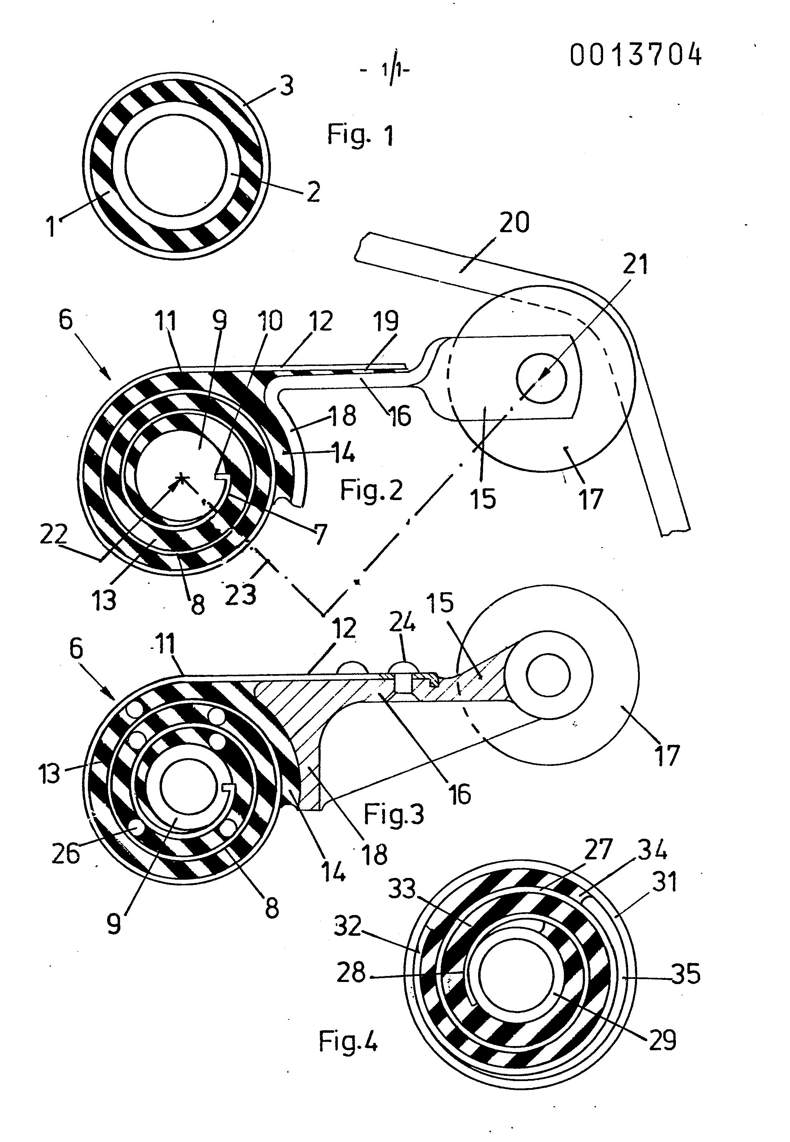

Bei dem Lager nach Figur 1 ist ein ringförmiger Elastomerkörper 1 zwischen einer Innenhülse 2 und einer Außenhülse 3 durch Druckvorspannung gehalten oder mit der Innenhülse 2 und der Außenhülse 3 haftend verbunden. Bei einer Verdrehung der Außenhülse 3 gegenüber der Innenhülse 2 entsteht ein durch Schubkräfte des Elastomerkörpers 1 erzeugtes Rückstellmoment, das mit zunehmendem Drehwinkel verhältnismäßig steil ansteigt.

Bei dem Lager 6 nach Figur 2 ist das innere Ende 7 einer mit Abstand der Windungen gewickelten Bandspirale 8 mit einem bolzenförmigen Innenteil 9 zugfest verbunden, indem das innere Ende 7 in einen Schlitz 10 des Innenteils 9 eingreift. Das Auslaufende 11 der Bandspirale 8 weist eine geradlinige Verlängerung 12 auf. Eine mit der Bandspirale beidseitig haftend verbundene Elastomerspirale 13 füllt den von der Bandspirale 8 umschlossenen Zwischenraum aus und weist ein Auslaufende 14 auf, das sich etwa senkrecht zur Verlängerung 12 erstreckt und das Auslaufende 11 der Bandspirale 8, das durch den Obergang der Bandspirale 8 in die Verlängerung 12 festgelegt ist, um einen entsprechenden Umfangsbetrag überschreitet. An einem zweischenkligen Spannhebel 15 ist der eine Schenkel 16, der an seinem Ende eine Spannrolle 17 trägt, mit der Verlängerung 12 über eine dünne Elastomerschicht 19 haftend verbunden. Der zum Schenkel 16 etwa rechtwinklig angeordnete andere Schenkel 18 liegt an der der Bandspirale 8 abgewandten Fläche des Auslaufendes 14 der Elastomerspirale 13 lose oder haftend an. Ein angedeuteter Keilriemen 2o umschlingt die Spannrolle 17 und übt eine in Richtung der Winkelhalbierenden der Umschlingung wirksame Spannkraft 21 auf die Spannrolle 17, wobei der Keilriemen 2o unter einer gewollten Spannung steht. Der Spannkraft 21 wird durch eine am Innenteil 9 angreifende Lagerkraft 22 das Gleichgewicht gehalten, wobei ein Drehmoment des Kräftepaars 21/22 mit einem wirksamen Hebelarm 23 auftritt. Diesem Drehmoment wird das Gleichgewicht durch ein Rückstellmoment des Lagers 6 gehalten, das aus einer mit geeigneten Mitteln erzielten Vorspannung des Innenteils 9 um einen entsprechenden Verdrehwinkel gegenüber der gezeichneten Lage des Spannhebels 15 resultiert. Die Vorspannung des Innenteils 9 kann groß gewählt werden, und die Spannkraft 21 steigt mit zunehmendem Verdrehwinkel des Spannhebels 15 nur wenig an, so daß sich die Spannung des Keilriemens 20 bei einer entsprechenden Längung desselben in vorteilhafter Weise nur wenig ändert.

Das Lager 6 nach Figur 3 besteht aus einem hülsenförmigen Innenteil 9, einer Bandspirale 8 mit einer Verlängerung 12 des Auslaufendes 11 und einer Elastomerspirale 13 mit einem Auslaufende 14. Ein eine Spannrolle 17 tragender Schenkel 16 eines zweischenkligen Spannhebels 15 ist mittels zweier Nieten 24 mit der Verlängerung 12 verbindbar. Der andere Schenkel 18 ist so ausgebildet, daß er sich im zusammengebauten Zustand der Teile an dem Auslaufende 14 der Elastomerspirale 13 abstützt, wobei eine haftende Verbindung der Elastomerspirale 13 mit dem Schenkel 18 nicht erforderlich ist. Die Elastomerspirale 13 ist keine zusammenhängende Spirale, sondern weist Durchbrechungen 26 auf, in die die anliegenden Bereiche der Elastomerspirale ausweichen können, wenn von der mit zunehmendem Verdrehwinkel enger werdenden Bandspirale 8 Druckkräfte auf die Elastomerspirale 13 ausgeübt werden. Durch diese Maßnahme kann der Verdrehwinkel des Lagers vergrößert werden gegenüber dem eines Lagers, das die Durchbrechungen 26 nicht aufweist.

Bei dem Lager nach Figur 4 sind das innere Ende 28 einer Bandspirale 27 mit einer Innenhülse 29 und das Auslaufende 32 der Bandspirale 27 mit dem Innenmantel einer Außenhülse 31 haftend verbunden, wobei die Haftverbindung als Klebeverbindung, als Lötverbindung oder in anderer Art ausgeführt sein kann.

Sie kann auch mit einer dünnen Elastomerschicht hergestellt werden. Eine Elastomerspirale 33 ist mit der Bandspirale 27 haftend verbunden und weist ein über das Auslaufende 32 der Bandspirale 27 hinausgehendes Auslaufende 34 auf, das an dem Innenmantel der Außenhülse 31 lose oder haftend anliegt. Das Lager nach Figur 4 kann in eine Bohrung eines Maschinenteils, beispielsweise eines Spannhebels eingebracht und durch einen Preßsitz der Außenhülse 31 gehalten werden und so zur drehelastischen Lagerung des Maschinenteils dienen. Beim Einbau ist darauf zu achten, daß eine Lagerkraft etwa im Bereich der Auslaufenden 32 und 34 als Druckkraft aufgenommen wird. Bei einer Verdrehung der Außenhülse 31 gegenüber der Innenhülse 29 werden die radialen Maße der Bandspirale 27 und der Elastomerspirale 33 reduziert, wobei der den Auslaufenden 32 und 34 gegenüberliegende Spalt 35 vergrößert wird.

- 1 -

0013704

Patentansprüche:

1. Mit einem Elastomerkörper ausgerüstetes Lager (6) zur drehelastischen Lagerung von Schwinghebeln, insbesondere von eine Spannrolle (17) tragenden Spannhebeln (15) für Keilriemenspanner von Kraftfahrzeugmotoren, mit einem zylindrischen Innenteil (9, 29), einem das Innenteil (9, 29) umschließenden, mit einem Schwinghebel bzw. Spannhebel (15) verbindbaren oder verbundenen Außenteil und einem einen Zwischenraum zwischen dem Innenteil (9, 29) und dem Außenteil ausfüllenden, Umfangskräfte übertragenden Elastomerkörper, dadurch gekennzeichnet, daß das Auslaufende (11, 32) einer mit dem Innenteil (9, 29) verbundenen und Abstand der Windungen aufweisenden Bandspirale (8, 27) das Außenteil bildet und der Elastomerkörper den von der Bandspirale (8, 27) umschlossenen Zwischenraum in Form einer mit der Bandspirale (8, 27) haftend verbundenen Elastomerspirale (13, 33) ausfüllt.

2. Lager nach Anspruch 1, dadurch gekennzeichnet, daß ein Schenkel (16) eines zweischenkligen, eine Spannrolle (17) tragenden Spannhebels (15) mit einer Verlängerung (12) des Auslaufendes (11) der Bandspirale (8) verbunden oder verbindbar ist und der andere Schenkel (18) an einem über das Auslaufende (11) der Bandspirale (8) hinausgehenden Auslaufende (14) der Elastomerspirale (13) anliegt.

./2

3. Lager nach Anspruch 1,
dadurch gekennzeichnet,
daß das Auslaufende (32) der Bandspirale (27)
in einem begrenzten Umfangsbereich mit dem Innenmantel eines zylindrischen Gehäuses (Außenhülse
31) verbunden ist und das Auslaufende (34) der
Elastomerspirale (33) in einem begrenzten Umfangbereich an dem Innenmantel des Gehäuses
(Außenhülse 31) anliegt.

4. Lager nach Ansprüchen 1 oder 2,
dadurch gekennzeichnet,
daß die Bandspirale (8, 27) aus einem metallischen
Federband oder einem Band von beliebigem Werkstoff
oder einem Gewebeband gewickelt ist.

5. Lager nach einem der Ansprüche 1 bis 4,
dadurch gekennzeichnet,
daß die Elastomerspirale (13) Durchbrechungen
(26) aufweist.

0013704

- 1/1 -

Fig. 1

Fig. 2

Fig. 3

Fig. 4

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - C - 875 593 (RINGFEDER)<br>* Insgesamt *<br><br>-- | 1,4 | F 16 H 7/08<br>F 16 F 3/10 |
| X | US - A - 2 158 028 (BURKE)<br>* Seite 2, linke Spalte, Zeilen 15-48; Figuren 3,4 *<br><br>-- | 1,3,4 | |
| | DE - C - 838 971 (KREISSIG)<br>* Insgesamt *<br><br>-- | 1,3,4 | |
| X | DE - C - 722 719 (VOIGT)<br>* Insgesamt *<br><br>-- | 1,4 | RECHERCHIERTE SACHGEBIETE (Int. Cl. 3)<br><br>F 16 H<br>F 16 F<br>B 62 M<br>B 60 G<br>B 62 D<br>B 60 K<br>F 16 C |
| | US - A - 2 169 335 (BEST)<br>* Seite 3, Zeile 40 bis Seite 4, Zeile 2; Figuren 6,7 *<br><br>-- | 1,4 | |
| | FR - A - 883 206 (INTER TECHNIQUE)<br>* Insgesamt *<br><br>-- | 1,3,4 | |
| | GB - A - 542 409 (VOIGT)<br>* Seite 1, Zeilen 66-103; Figur 1 *<br><br>-- | 1,3,4 | |
| X | FR - A - 2 225 657 (ARFINA)<br>* Seite 5; Figuren 1-3 *<br><br>--      ./. | 1,3-5 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 10-03-1980 | ESPEEL |

EPA form 1503.1   06.78

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - C - 904 843 (DESCH)<br>* Insgesamt *<br><br>-- | 1 | |
| A | US - A - 3 975 965 (SPEER) | 1 | |
| A | US - A - 2 176 971 (KLOTSCH) | 1 | |
| A | US - A - 2 127 219 (HIRSHFELD) | 1 | |
| A | US - A - 2 073 419 (HOUDAILLE) | 1 | RECHERCHIERTE SACHGEBIETE (Int. Cl. 3) |
| A | FR - A - 375 761 (PEUGEOT) | 1 | |
| | ---- | | |